Europäisches Patentamt

European Patent Office

Office européen des brevets

(19)

(11) **EP 0 560 657 B1**

(12) **FASCICULE DE BREVET EUROPEEN**

(45) Date de publication et mention de la délivrance du brevet:
**30.10.1996 Bulletin 1996/44**

(51) Int Cl.6: **G05D 3/18**, H01F 7/18

(21) Numéro de dépôt: **93400576.0**

(22) Date de dépôt: **05.03.1993**

(54) **Dispositif de transmission d'énergie de commande mécanique, notamment pour le contrôle de la pression de freinage dans un frein**

Vorrichtung zur Energieübertragung einen mechanischen Bedienung, insbesondere zur Steuerung des Bremsdruck einen Bremse

Energy transmission device for a mechanical control, particularly to control the braking pressure in a brake

(84) Etats contractants désignés:
**AT BE DE DK ES FR GB IT NL PT SE**

(30) Priorité: **10.03.1992 FR 9202843**

(43) Date de publication de la demande:
**15.09.1993 Bulletin 1993/37**

(73) Titulaire: **THOMSON-CSF**
**75008 Paris (FR)**

(72) Inventeur: **Menard, Christian**
**F-92402 Courbevoie Cedex (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
EP-A- 0 034 076    DE-A- 3 728 589
DE-A- 3 939 857    FR-A- 2 314 529

## Description

La présente invention concerne un dispositif de transmission d'énergie de commande mécanique, notamment pour le contrôle de la pression de freinage dans un frein.

Elle s'applique notamment aux commandes hydrauliques nécessitant de très courts temps de réponse et de faibles coûts de fabrication, ces commandes étant par exemple appliquées à des systèmes de freinage, d'asservissement de direction, ou de guidage automatique, de véhicules ou de mécanismes mobiles.

Il existe plusieurs solutions de transmission d'énergie de commande mécanique, notamment à base d'organes pneumatiques, électriques ou hydrauliques. Les organes pneumatiques ont des temps de réponse trop lents pour beaucoup d'applications et les organes électriques nécessitent de grandes quantités d'énergie électrique incompatibles avec des systèmes embarqués. Ces deux types d'organes sont de plus relativement coûteux. Les systèmes de commande des véhicules modernes, notamment appliqués au freinage ou au guidage automatique par exemple, exigent des temps de réponses de plus en plus courts, correspondant par exemple à des bandes passantes de 10 Hz environ. Par ailleurs, la diminution du coût global des véhicules ou des matériels impose de réduire de plus en plus le coût de leurs organes constitutifs donc y compris celui des organes de commande précités. Actuellement, seuls les organes hydrauliques paraissent susceptibles d'être les mieux adaptés pour transmettre l'énergie de commande mécanique embarquée dans des véhicules ou des matériels mobiles, de façon peu coûteuse et suffisamment rapide conformément aux exigences de nouvelles conditions techniques et économiques.

Les dispositifs généralement utilisés dans le domaine des commandes hydrauliques mettent en oeuvre des organes complets tels que des servomécanismes à base de valves de débit ou de pression par exemple. Les organes hydrauliques possèdent des caractéristiques et des architectures qui constituent un ensemble homogène et dont la fonction de contrôle du débit ou de la pression est constituée d'un ensemble de plusieurs étages composés de tiroirs et ressorts.

En général, ces servomécanismes possèdent deux étages. Le premier étage constituant un actionneur linéaire, commande une palette munie d'un axe ou barreau en mouvement par magnétisation qui résulte de l'action d'un courant traversant un solénoïde associé à l'axe. Le deuxième étage est un amplificateur hydraulique composé d'un tiroir et d'un ressort de rappel par exemple. Les inerties mécaniques, les résonances et les constantes de temps compliquent l'asservissement et limitent la rapidité de déplacement des organes. Il est néanmoins possible d'améliorer les performances de ces systèmes, notamment celles relatives à leur temps de réponse ou bande passante, mais au prix d'un accroissement de leur complexité qui accroît considérablement leurs coûts de fabrication, compatibles éventuellement d'applications aéronautiques mais incompatibles d'application à des véhicules terrestres, par exemple, produits en grande série et à faibles coûts imposés.

Une solution connue susceptible de diminuer les inconvénients précités, notamment en simplifiant l'asservissement grâce à des phénomènes de résonance et d'instabilité moins dominants, consiste à remplacer l'actionneur précédent, de type linéaire, par un actionneur rotatif, transmettant par l'intermédiaire d'une bielle par exemple, un mouvement de translation au tiroir hydraulique et à remplacer les ressorts du deuxième étage par un ressort de rappel s'exerçant sur l'actionneur rotatif. Une demande de brevet français 2 314 529 présente un système de commande comportant un actionneur rotatif.

Si cette dernière solution moins complexe et plus économique, améliore bien les performances en supprimant notamment les phénomènes de résonance, les essais réalisés jusqu'à présent n'ont jamais permis d'atteindre les temps de réponse souhaités, de l'ordre de 0,1 seconde par exemple, correspondant à des bandes passantes de l'ordre de 10 Hz environ.

Le but de l'invention est de pallier les inconvénients précités notamment en ajoutant certaines précautions d'utilisation au niveau des circuits de commande et d'asservissement de l'actionneur rotatif.

A cet effet, l'invention a pour objet un dispositif de transmission d'énergie de commande mécanique comportant au moins un actionneur rotatif équipé d'un ressort de rappel et des moyens reliés à l'actionneur rotatif pour transmettre un mouvement linéaire à un organe mécanique, caractérisé en ce que l'actionneur rotatif est mû par un électro-aimant rotatif dont la position angulaire est commandée par un courant impulsionnel et périodique et en ce qu'il comporte en outre des moyens de suppression de l'énergie magnétisante stockée dans ledit électro-aimant.

L'invention a pour principaux avantages qu'elle permet d'obtenir des dispositifs économiques et ayant de très courts temps de réponse, compatibles par exemple de systèmes de freinage ou de guidage automatiques, qu'elle est peu encombrante et qu'elle est simple à mettre en oeuvre.

D'autres caractéristiques et avantages apparaîtront à l'aide de la description qui suit, faite en regard des dessins annexés qui représentent :

-   la figure 1a, un schéma de principe d'un système de transmission d'énergie de commande mécanique selon l'art antérieur ;
-   la figure 1b, une courbe de réponse du système précédent suite à une variation de consigne de position ;
-   la figure 2a, un schéma de principe d'un dispositif possible de transmission d'énergie de commande mécanique selon l'invention ;
-   la figure 2b, une courbe de réponse du dispositif précédent suite à une variation de consigne de position ;

- la figure 3, une forme possible de courant de commande d'un actionneur rotatif utilisé dans le dispositif selon l'invention ;
- les figures 4a et 4b, des formes de l'énergie magnétisante stockée dans l'électro-aimant de l'actionneur précité en fonction de la fréquence de son courant de commande ;
- la figure 5, un schéma d'un circuit possible de démagnétisation des circuits internes de l'actionneur ;
- les figures 6 et 7, un exemple indicatif d'utilisation du dispositif selon l'invention pour le contrôle de la pression de freinage dans un frein.

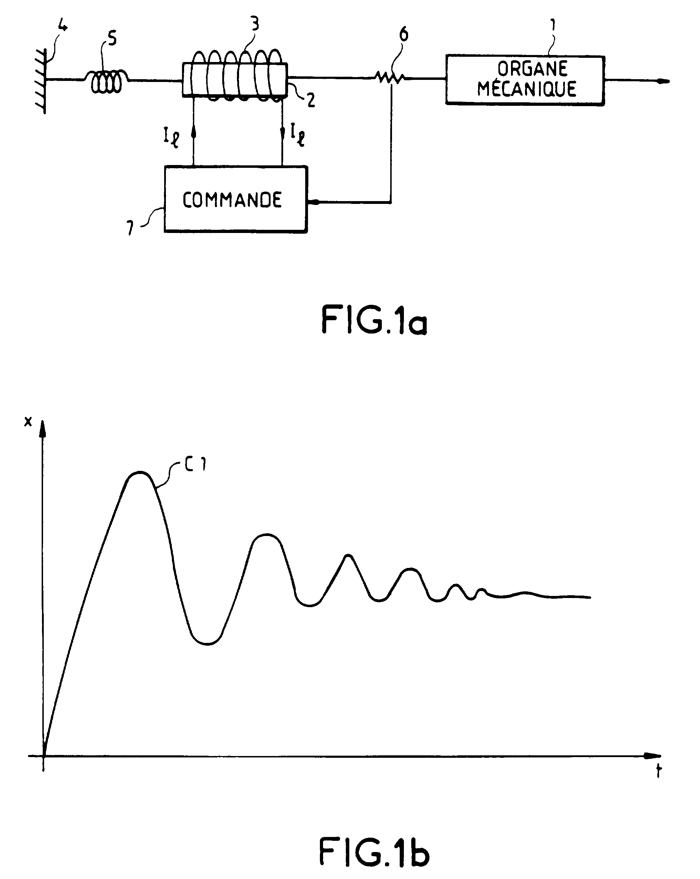

La figure 1a présente un schéma de principe d'un système de transmission d'énergie de commande mécanique selon l'art antérieur. Un organe mécanique 1, un tiroir aiguillant plusieurs circuits hydrauliques entre eux par exemple, a sa position commandée par un actionneur linéaire, un électro-aimant, par exemple, constitué d'un barreau magnétique 2 entouré d'un solénoïde 3. Le barreau 2 est relié à une de ses extrémités à un élément fixe 4 par l'intermédiaire d'un ressort 5, il est relié à son autre extrémité à l'organe mécanique 1. Entre ce dernier et le barreau 2 est intercalé un moyen de lecture 6 de la position linéaire de l'organe mécanique 1. Ce moyen de lecture 6 peut être par exemple un potentiomètre relié à un des moyens de commande 7 de l'électro-aimant 2, 3, le potentiomètre fournissant une tension ou un courant image de la position de l'organe mécanique 1. Les moyens de commande 7 fournissant par ailleurs un courant $I\ell$ dont la position du barreau 2 est fonction, cette information de position permet de réaliser un asservissement de position de l'organe mécanique 1. Le ressort 5 permet le rappel du barreau 2 dans sa position initiale.

Le système ainsi décrit constitue en fait en pratique un système oscillatoire, système régi par une équation du second degré. En conséquence, chaque variation de consigne de position de la part des moyens de commande 7 est susceptible de s'accompagner d'un régime transitoire oscillant comme l'illustre la courbe C1 de la figure 1b représentant la réponse de la position linéaire x de l'organe mécanique 1 en fonction du temps, suite à une variation de consigne de position. Dans le cas du système de la figure 1a, les valeurs notamment de la force de rappel du ressort 5 et des masses du barreau 2 et de l'organe mécanique 1 entraînent un tel régime oscillant, analogue à celui représenté par la courbe C1 où les oscillations retardent le temps d'établissement d'une position stable, donc allongent en fait le temps de réponse du système. Outre l'effet négatif précité de ces oscillations parasites, la lecture de la position de l'organe mécanique 1 est aussi rendue compliquée par le mouvement oscillatoire des moyens de lecture 6 solidaires de l'organe mécanique 1.

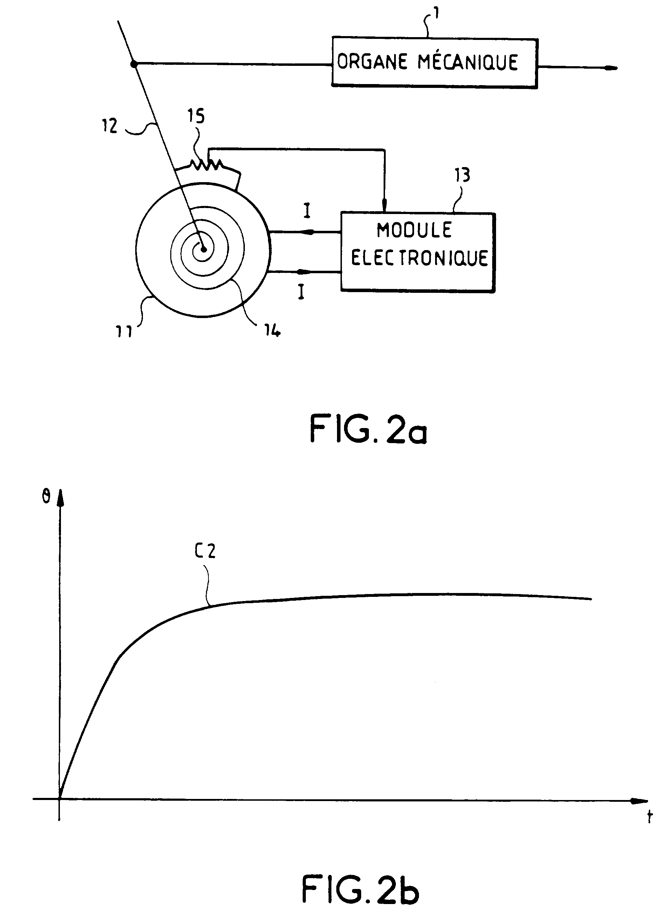

Une solution supprimant ce régime oscillatoire transitoire consiste à remplacer l'actionneur linéaire, constitué de l'électro-aimant 2, 3, par un actionneur rotatif 11 comme le montre le schéma de principe de la figure 2a. Dans le dispositif présenté par cette figure, l'organe mécanique 1, un tiroir hydraulique par exemple, dont le mouvement est toujours linéaire, est relié à l'actionneur rotatif 11 par des moyens de transmission 12. Ces moyens de transmission 12, une bielle par exemple, transmettent à partir du mouvement de rotation de l'actionneur rotatif 11 un mouvement linéaire à l'organe mécanique 1. L'actionneur 11 est mû par un électro-aimant rotatif dont il est solidaire mécaniquement. La position angulaire de ce dernier, donc de l'actionneur rotatif 11 est commandée par exemple par un courant I délivré par un module électronique 13. Un ressort 14 concentrique exerce un couple opposé à celui créé par le courant I de l'électro-aimant rotatif de manière à ramener l'actionneur rotatif 11 vers sa position initiale. Des moyens de lecture 15 de la position angulaire de l'actionneur 11 délivrent une grandeur électrique représentative de cette position, une tension ou un courant par exemple, au module électronique 13 pour permettre l'asservissement de position angulaire de l'actionneur 11.

Les équations régissant les mouvements angulaires de l'actionneur 11 sont encore du second degré. Néanmoins les valeurs notamment du moment d'inertie de l'actionneur lui-même, des couples exercés par le ressort 14 et par l'organe mécanique 1 permettent d'obtenir des régimes transitoires en deçà du régime critique comme l'illustre la figure 2b. En effet la courbe C2, représentative de la réponse de la position angulaire θ de l'actionneur 11 en fonction du temps t suite à une variation de consigne de position angulaire, ne présente pas d'oscillations.

La variation de position angulaire de l'actionneur rotatif 11 est commandée par la variation de la valeur moyenne du courant I alimentant l'électro-aimant qui lui est solidaire. Une méthode simple pour faire varier la valeur moyenne du courant I consiste à choisir un courant impulsionnel et par exemple périodique, de valeur crête sensiblement constante et à faire varier son rapport cyclique.

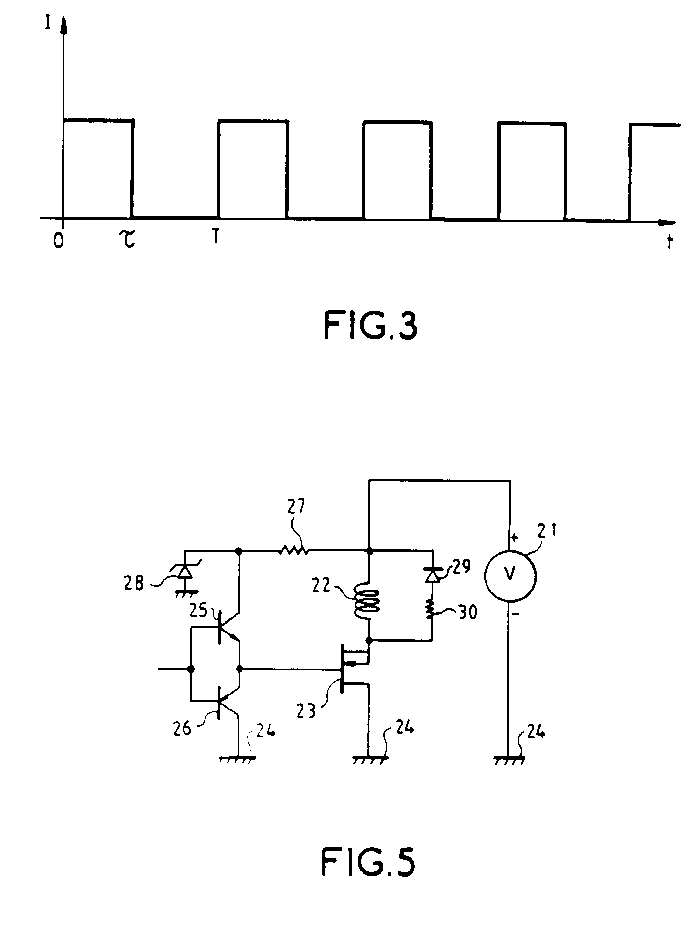

La figure 3 illustre une forme possible du courant I en fonction du temps t, destiné à alimenter l'électro-aimant de l'actionneur rotatif 11. Ce courant I est impulsionnel et par exemple périodique, durant chaque période T par exemple, il est non nul et égal à I pendant une durée τ inférieure à T, et nul pendant le reste de la période. La valeur moyenne du courant I, notée $\bar{I}$ est donc définie par la relation suivante :

$$\bar{I} = \frac{\tau}{T} I \qquad (1)$$

La fréquence du courant I est telle, plusieurs centaines de Hertz par exemple, que les intervalles de temps où il est nul n'influent pas directement sur la position de l'électro-aimant de l'actionneur ni ne créent d'instabilité à cause des constantes de temps de ce dernier très nettement supérieures aux intervalles de temps où le courant I est nul. Le rapport entre le temps $\tau$ où le courant I est établi et la période T de ce courant I, constitue le rapport cyclique du courant I.

Pour des fréquences du courant I relativement faibles, le temps de réponse de la position angulaire de l'actionneur rotatif 11 est encore trop long, dans ce sens qu'il n'atteint pas par exemple des valeurs de l'ordre de 0,1 seconde pour être compatible de certaines applications. La position angulaire de l'actionneur rotatif 11 étant commandée par le rapport cyclique d'un courant périodique, une solution permettant d'augmenter la bande passante du dispositif ou, ce qui revient au même, de diminuer son temps de réponse, conduit à augmenter la fréquence du courant I. Or, les essais réalisés antérieurement ne laissaient pas apparaître d'augmentation de la bande passante avec l'augmentation de cette fréquence et les temps de réponse de l'actionneur rotatif 11 stagnaient à une valeur trop grande pour permettre l'exploitation de ce dernier dans des dispositifs de transmission d'énergie de commande adaptés à des applications modernes telles que le guidage automatique ou des systèmes de freinage par exemple. La cause de cette stagnation du temps de réponse malgré l'augmentation de la fréquence du courant I semblait être due à des effets mécaniques, notamment des frottements.

Les observations et les expériences réalisées par la Déposante ont permis de constater le rôle de l'énergie magnétisante stockée dans l'électro-aimant de l'actionneur rotatif 11.

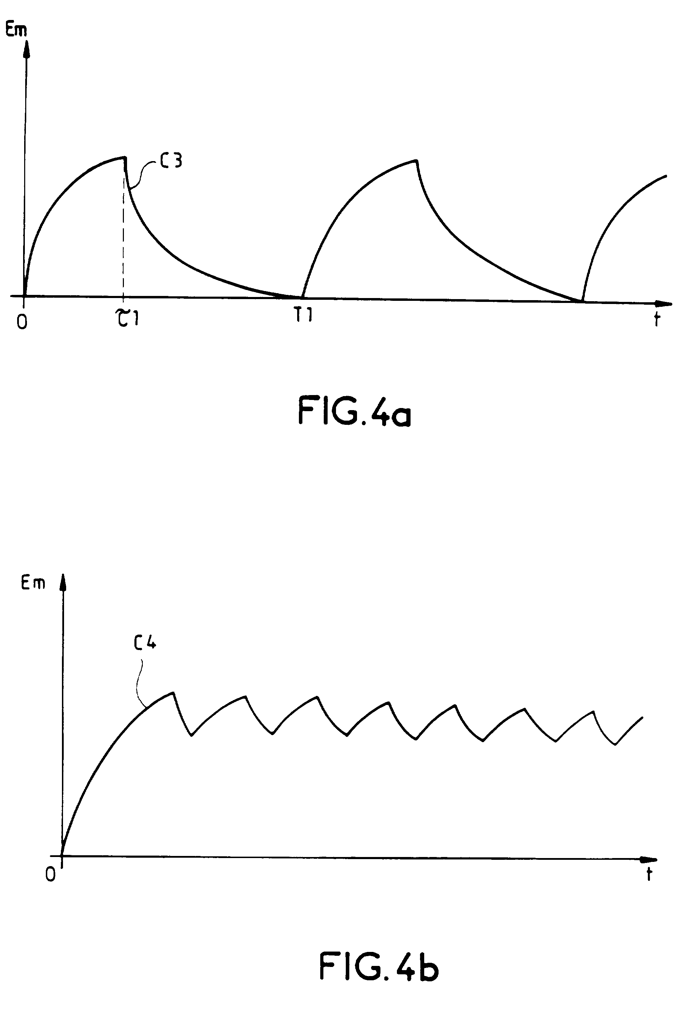

A cet effet, les figures 4a et 4b illustrent l'allure de cette énergie magnétisante Em en fonction du temps t. La courbe C3 de la figure 4a représente l'énergie magnétisante Em où, à chaque période de durée T1, l'électro-aimant se charge d'énergie magnétisante pendant une durée $\tau_1$, c'est-à-dire quant le courant I est non nul, et se décharge complètement de cette énergie magnétisante pendant tout le reste de la période. Cette décharge complète de l'énergie magnétisante n'est possible que si la période T1 est suffisamment grande donc que la fréquence du courant I est suffisamment faible. Dès que cette fréquence est augmentée en vue d'augmenter la bande passante du dispositif, la période du courant diminue à tel point que l'énergie magnétisante stockée dans l'électro-aimant de l'actionneur rotatif 11 ne se décharge plus complètement comme l'illustre la courbe C4 de la figure 4b. Sur cette figure, l'électro-aimant se charge jusqu'à une valeur d'énergie magnétisante maximale mais ne se décharge plus complètement par la suite, au cours des périodes suivantes. L'énergie magnétisante Em varie alors entre une valeur maximale et une valeur minimale non nulle. Or, si la position angulaire de l'actionneur rotatif 11 est définie par la valeur moyenne du courant I, elle est en fait d'abord fonction de la valeur moyenne de l'énergie magnétisante stockée dans l'électro-aimant de l'actionneur 11, cette énergie magnétisante étant fonction du courant I. Quand sa fréquence est telle que l'énergie magnétisante Em est représentée par la courbe C4, une variation de la valeur moyenne du courant I, donc de son rapport cyclique, destinée à faire varier la position angulaire de l'actionneur, génère une variation de la valeur moyenne, non pas dans une période de courant comme dans le cas de la courbe C3, mais avec un temps de réponse fonction des constantes de temps des circuits internes de l'électro-aimant. Dans ce dernier cas, l'énergie magnétisante Em est toujours représentée par une courbe de forme analogue à la courbe C4 mais s'établit avec une valeur moyenne différente. Quand la fréquence du courant I est trop élevée, le temps de réponse de l'actionneur aux variations du rapport cyclique du courant I n'est donc pas fonction de la fréquence de ce dernier mais des constantes de temps des circuits internes de l'électro-aimant, c'est-à-dire en fait principalement de sa bobine. La self-inductance de cette dernière possède une valeur conférant à l'électro-aimant, et donc à l'actionneur qui lui est solidaire, des temps de réponse trop longs.

Ce problème ayant été mis en évidence, le dispositif de transmission d'énergie de commande mécanique selon l'invention conserve la structure de base présentée par le schéma de principe de la figure 2a utilisant notamment l'actionneur rotatif 11 en y ajoutant, à l'intérieur du module électronique 13 par exemple, un circuit de démagnétisation de l'électro-aimant de l'actionneur 11 destiné à permettre la suppression de son énergie magnétisante Em dans une période du courant I.

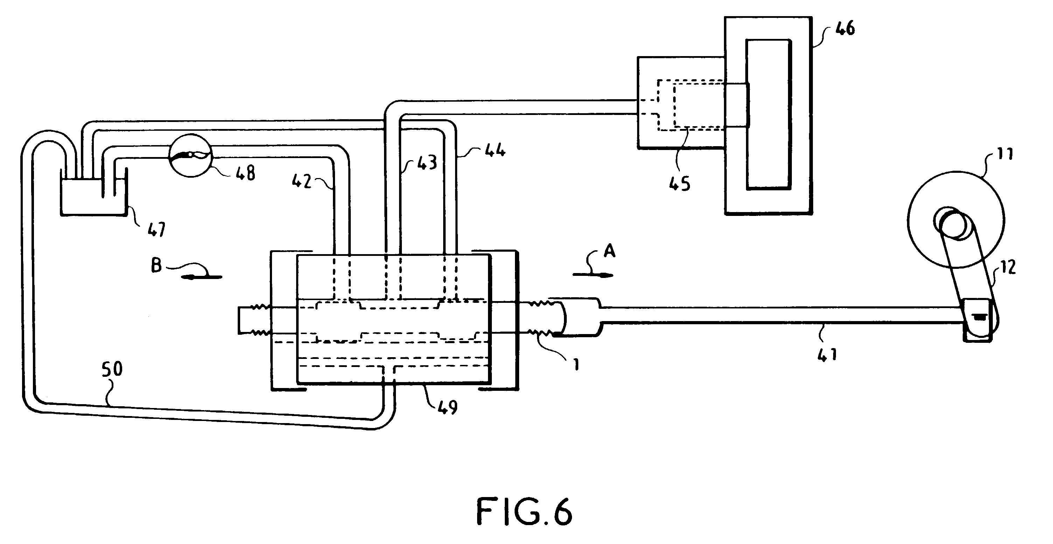

La figure 5 présente un exemple possible de circuit de démagnétisation de l'électro-aimant de l'actionneur 11. Le courant I est fourni par exemple par une source de tension 21, égale à 28 volts par exemple. Cette source de tension 21 est principalement chargée par la bobine 22 du rotor de l'électro-aimant de l'actionneur 11 et par un transistor 23, à effet de champ par exemple. La bobine 22 est reliée au pôle positif de la source de tension 21 et au drain du transistor 23. Le pôle négatif de la source de tension 21 et la source du transistor 23 sont reliés par exemple à un potentiel de masse 24. Le transistor est commandé par exemple par deux transistors 25, 26 montés en "push-pull". L'émetteur du transistor 25 et le collecteur du transistor 26 sont reliés à la grille du transistor 23, le collecteur du transistor 26 étant relié au potentiel de masse 24. Une résistance 27 câblée entre le pôle positif de la source de tension 21 et le collecteur du transistor 25 limite le courant de commande dans les transistors 25, 26. Une diode écréteuse 28 limite la tension aux bornes de ces transistors. Les bases des transistors 25, 26 sont reliées à un même signal de commande logique. La présence de ce signal fait conduire le transistor 23, par l'intermédiaire des autres transistors 25,26, donc fait parcourir la bobine par un courant, de l'ordre de 2 ampères par exemple, et l'absence de ce signal bloque le transistor 23 donc annule le courant dans la bobine 22. Ce signal peut être fourni par un circuit analogique ou par un circuit numérique à base de microprocesseur par exemple. Lorsque le courant est annulé dans la bobine 22, une diode 29 et une résistance 30 la démagnétisent. A cet effet, la résistance 30 est câblée entre le point commun à la bobine 22 et au drain du transistor 23 et la cathode de la diode 29, l'anode de cette dernière étant reliée à l'autre extrémité de la bobine 22 elle-même reliée au pôle positif de la source de tension 21. Un filtre, non représenté, composé principalement d'un condensateur et situé entre la bobine 22 et la source de tension 21, découple celle-ci du reste du circuit en lui évitant notamment de brusques variations de courant à sa sortie.

Une demande de brevet européen EP-A- 034 076 présente un exemple de réalisation d'un circuit de décharge d'une bobine.

L'énergie magnétisante à laquelle est soumis l'électro-aimant de l'actionneur rotatif est donc annulée rapidement après que le courant dans sa bobine a été interrompu. Cela permet d'augmenter la fréquence, et de profiter de cette augmentation pour diminuer le temps de réponse du dispositif selon l'invention. Une bande passante de 10 Hz, soit un temps de réponse de 0,1 seconde environ, peut alors être aisément atteinte.

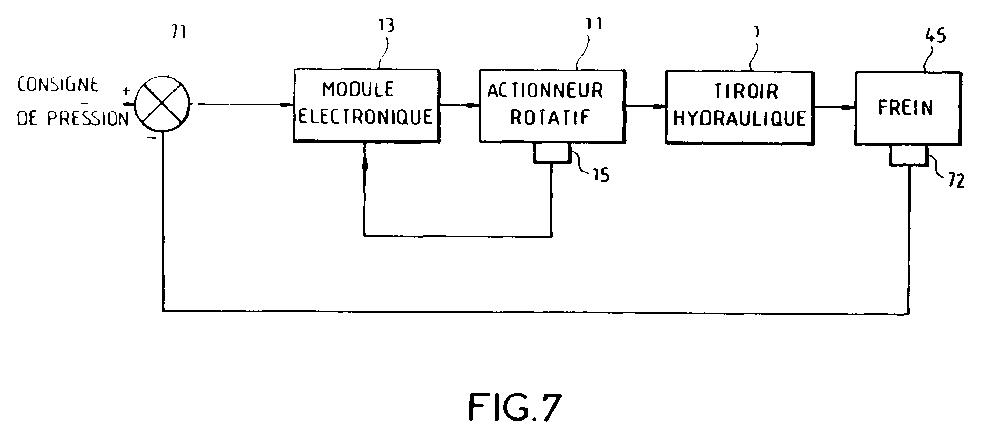

Les figures 6 et 7, donnent à titre d'exemple indicatif, une application possible du dispositif de transmission d'énergie de commande mécanique selon l'invention pour le contrôle de la pression de freinage dans un frein.

La figure 6 présente un actionneur rotatif 11 équipé d'un ressort de rappel non représenté et transmettant par l'intermédiaire d'une bielle 12 et d'une barre 41 un mouvement de translation à un tiroir hydraulique 1 contenu dans un corps 49. Ce tiroir aiguille la circulation d'huile ou de liquide de freinage à travers plusieurs circuits hydrauliques 42, 43, 44. Le tiroir hydraulique 1, en se déplaçant dans le sens indiqué par la flèche A, permet au débit hydraulique présent dans un premier circuit 42 d'être aiguillé vers un deuxième circuit 43, mettant ainsi en communication la génération hydraulique avec l'utilisation, c'est-à-dire avec un piston 45 agissant sur l'étrier de frein 46. Lorsque le tiroir se déplace dans le sens indiqué par la flèche B, le circuit d'utilisation 43 est mis en communication avec un troisième circuit 44. Ce dernier circuit assure la mise en communication de l'utilisation, le piston 45, avec un réservoir 47. Le premier circuit 42 est relié au réservoir 47 par l'intermédiaire d'une pompe 48 régulée à une certaine pression, 150 bars par exemple. Le corps 49 possède à chacune de ses extrémités un soufflet de récupération d'huile ou de liquide qui est ensuite transmise par un circuit 50 au réservoir 47.

L'électro-aimant de l'actionneur rotatif 11 peut être commandé par un courant impulsionnel de fréquence égale à environ 500 Hz par exemple.

Le dispositif de la figure 6 offre la possibilité de changer entre la bielle 12 et le tiroir hydraulique 1, la composition du mouvement et du déplacement à la demande selon que des cames sont intercalées ou non entre la bielle 12 et le tiroir hydraulique 1. La bielle 12 peut être par ailleurs prolongée au delà de l'axe de translation du tiroir hydraulique 1 représenté par la barre 41. Cela permet en effet d'agir directement et manuellement sur la position du tiroir indépendamment de l'asservissement de position ou de dysfonctionnements éventuels au niveau de cet asservissement. Ce dernier est réalisé par le module électronique 13, non représenté sur la figure 6.

La figure 7 présente le synoptique d'un type d'asservissement possible adapté au dispositif précédent de la figure 6.

Une consigne de pression est affichée à l'entrée positive d'un élément différentiateur 71. Ce dernier transmet une information d'erreur au module électronique 13. Un opérateur interne à ce module transforme cette erreur de pression en erreur de position, grâce à une table de conversion chargée par exemple dans des mémoires. Le module électronique fournit un courant I à l'électro-aimant de l'actionneur rotatif 11 fonction de la position angulaire désirée de celui-ci. Le capteur de position angulaire 15 de l'actionneur rotatif 11 envoie au module électronique 13 une tension ou un courant représentatif de la position de l'actionneur. Le module électronique 13 assure une comparaison avec une consigne fonction de l'information d'erreur fournie par l'élément différentiateur 71 et détermine un signal d'erreur qui devient nul lorsque la position demandée et celle indiquée par le capteur de position 15 sont identiques. La position angulaire de l'actionneur rotatif 11 correspond à une position linéaire du tiroir hydraulique 1. Selon la position du tiroir hydraulique 1, la pression est appliquée à l'utilisation donc au piston du frein 45 ou envoyée vers le réservoir 47. Dans le cas où la pression est envoyée au frein, cette dernière augmente dans le frein. Un capteur de pression 72 relié à l'entrée négative de l'élément différentiateur 71 indique la pression réelle obtenue dans le frein. Lorsque la consigne de pression et la pression réelle dans le frein sont égales, l'actionneur rotatif 11 se positionne de telle manière que le tiroir hydraulique 1 soit placé dans une position qui ne permet pas à la pression d'alimentation de se transmettre au frein et, de ce fait, la pression reste constante.

La figure 7 laisse apparaître deux boucles d'asservissement, une première régule la position angulaire de l'actionneur rotatif 11 et la deuxième régule la pression dans le frein. Selon les performances souhaitées, il est possible de ne pas asservir l'actionneur rotatif en position et de ne conserver que la deuxième boucle d'asservissement. Néanmoins, dans tous les cas, grâce notamment au circuit de démagnétisation de la bobine de l'électro-aimant de l'actionneur rotatif, les performances du dispositif de transmission d'énergie de commande tel que représenté par les figures 6 et 7 sont très satisfaisantes au niveau de la bande passante ou du temps de réponse obtenus.

## Revendications

1. Dispositif de transmission d'énergie de commande mécanique comportant au moins un actionneur rotatif (11) mû par un électro-aimant équipé d'un ressort de rappel (14) et des moyens (12) reliés à l'actionneur rotatif (11) pour transmettre un mouvement linéaire à un organe mécanique (1), caractérisé en ce que l'actionneur rotatif (11) est mû par un électro-aimant rotatif dont la position angulaire est commandée par la valeur moyenne d'un courant (I) impulsionnel et en ce qu'il comporte en outre des moyens électriques de suppression (29, 30) dans une période du courant (I) de l'énergie magnétisante (Em) stockée dans ledit électro-aimant.

2. Dispositif selon la revendication 1, caractérisé en ce que, le courant (I) étant périodique, la position angulaire de l'actionneur rotatif (11) est fonction du rapport cyclique

$$\left(\frac{\tau}{T}\right)$$

du courant (I), correspondant au rapport entre le temps où le courant (I) est établi et sa période.

3. Dispositif selon l'une quelconque des revendications 1 ou 2, caractérisé en ce que les moyens (12) pour transmettre un mouvement linéaire à l'organe mécanique sont constitués d'une bielle.

4. Dispositif selon l'une quelconque des revendications précédentes, caractérisé en ce qu'il comporte des moyens de mesure (15) de la position angulaire de l'actionneur rotatif (11), les moyens de mesure (15) délivrant une grandeur électrique représentative de la position angulaire à un module électronique (13) fournissant le courant (I) de commande de l'électro-aimant de l'actionneur rotatif (11) de manière à asservir la position angulaire de ce dernier.

5. Dispositif selon l'une quelconque des revendications précédentes, caractérisé en ce que les moyens de suppression (29, 30) de l'énergie magnétisante (Em) sont contenus dans le module électronique (13).

6. Dispositif selon la revendication 1, caractérisé en ce que les moyens de suppression de l'énergie magnétisante (Em) comportent au moins une résistance (30) et une diode (29) câblés en série, la résistance (30) étant reliée à une extrémité de la bobine (22) de l'électro-aimant de l'actionneur rotatif (11) et la cathode de la diode (29) étant reliée à l'autre extrémité de la bobine (22).

7. Dispositif selon l'une quelconque des revendications précédentes, caractérisé en ce que l'organe mécanique (1) est un tiroir hydraulique aiguillant la circulation de liquide à travers plusieurs circuits (42, 43, 44) hydrauliques.

8. Dispositif selon la revendication 7, caractérisé en ce que le liquide circulant dans les circuits hydrauliques (42, 43, 44) alimente un frein (45, 46).

9. Dispositif selon la revendication 8, caractérisé en ce que l'asservissement (13, 11, 15) de la position angulaire de l'actionneur rotatif est doublé par un asservissement (71, 45, 72) de la pression de liquide dans le frein (45, 46).

10. Dispositif selon la revendication 9, caractérisé en ce que l'asservissement de la pression de liquide dans le frein (45, 46) comprend au moins :

- un élément différentiateur (71) dont la sortie est reliée au module électronique (13), une consigne de pression étant affichée à l'entrée de l'élément différentiateur (71),
- un capteur de pression (72) relié à l'entrée négative de l'élément différentiateur (71), indiquant à celui-ci la pression réelle obtenue dans le frein, le module électronique (13) assurant une comparaison entre une consigne fonction de l'information d'erreur fournie en sortie de l'élément différentiateur (71) et la grandeur électrique délivrée par les moyens de mesure (15) représentative de la position angulaire de l'actionneur rotatif (11).

## Patentansprüche

1. Vorrichtung zum Übertragen von mechanischer Steuerenergie, mit wenigstens einer Drehbetätigungsvorrichtung (11), die von einem mit einer Rückstellfeder (14) versehenen Elektromagneten bewegt wird, und Mitteln (12), die mit der Drehbetätigungsvorrichtung (11) verbunden sind, um auf ein mechanisches Organ (1) eine lineare Bewegung zu übertragen, dadurch gekennzeichnet, daß die Drehbetätigungsvorrichtung (11) von einem Drehelektromagneten bewegt wird, dessen Winkelstellung vom Mittelwert eines impulsartigen Stromes (I) gesteuert wird, und daß sie außerdem elektrische Mittel (29, 30) zum Unterdrücken der in dem Elektromagneten gespeicherten Magnetisierungsenergie (Em) in einer Periode des Stromes (I) enthält.

2. Vorrichtung nach Anspruch 1, dadurch gekennzeichnet, daß, wenn der Strom (I) periodisch ist, die Winkelstellung der Drehbetätigungsvorrichtung (11) von dem Tastverhältnis ($\tau$/T) des Stromes (I) abhängt, das dem Verhältnis zwischen der Zeit, während der der Strom (I) ausgebildet ist, und seiner Periode entspricht.

3. Vorrichtung nach einem der Ansprüche 1 und 2, dadurch gekennzeichnet, daß die Mittel (12) zum Übertragen einer linearen Bewegung auf das mechanische Organ durch eine Kurbel gebildet sind.

4. Vorrichtung nach einem der vorhergehenden Ansprüche, dadurch gekennzeichnet, daß sie Mittel (15) zum Messen der Winkelstellung der Drehbetätigungsvorrichtung (11) aufweist, wobei die Meßmittel (15) eine die Winkelstellung angebende elektrische Größe einem elektronischen Modul (13) liefern, das den Strom (I) zur Steuerung des Elektromagneten der Drehbetätigungsvorrichtung (11) so abgibt, daß deren Winkelstellung geregelt wird.

5. Vorrichtung nach einem der vorhergehenden Ansprüche, dadurch gekennzeichnet, daß die Mittel (29, 30) zum Unterdrücken der Magnetisierungsenergie (Em) in dem elektronischen Modul (13) enthalten sind.

6. Vorrichtung nach Anspruch 1, dadurch gekennzeichnet, daß die Mittel zum Unterdrücken der Magnetisierungsenergie (Em) wenigstens einen Widerstand (30) und eine Diode (29) enthalten, die in Reihe geschaltet sind, wobei der Widerstand (30) mit einem Ende der Spule (22) des Elektromagneten der Drehbetätigungsvorrichtung (11) verbunden ist und die Kathode der Diode (29) mit dem anderen Ende der Spule (22) verbunden ist.

7. Vorrichtung nach einem der vorhergehenden Ansprüche, dadurch gekennzeichnet, daß das mechanische Organ (1) ein hydraulischer Schieber ist, der die Flüssigkeitszirkulation durch mehrere Hydraulikkreise (42, 43, 44) lenkt.

8. Vorrichtung nach Anspruch 7, dadurch gekennzeichnet, daß die in den Hydraulikkreisen (42, 43, 44) zirkulierende Flüssigkeit eine Bremse (45, 46) versorgt.

9. Vorrichtung nach Anspruch 8, dadurch gekennzeichnet, daß die Regelung (13, 11, 15) der Winkelstellung der Drehbetätigungsvorrichtung durch eine Regelung (71, 45, 72) des Flüssigkeitsdrucks in der Bremse (45, 46) dupliziert wird.

10. Vorrichtung nach Anspruch 9, dadurch gekennzeichnet, daß die Regelung des Flüssigkeitsdrucks in der Bremse (45, 46) wenigstens enthält:

- ein Differenzglied (71), dessen Ausgang mit dem elektronischen Modul (13) verbunden ist, wobei am Eingang des Differenziergliedes (71) ein Druck-Sollwert angezeigt wird;

- einen Druckaufnehmer (72), der mit dem negativen Eingang des Differenzglieds (71) verbunden ist und diesem den in der Bremse erhaltenen tatsächlichen Druck anzeigt, wobei das elektronische Modul (13) einen Vergleich zwischen einem Sollwert, der von der am Ausgang des Differenzierelementes (71) gelieferten Fehlerinformation abhängt, und der elektrischen Größe gewährleistet, die von den Meßmitteln (15) geliefert wird und die Winkelstellung der Drehbetätigungsvorrichtung (11) angibt.

**Claims**

1. Device for transmitting mechanical control energy, including at least one rotary actuator (11) moved by an electromagnet equipped with a return spring (14) and means (12) linked to the rotary actuator (11) for transmitting a linear movement to a mechanical element (1), characterized in that the rotary actuator (11) is moved by a rotary electromagnet the angular position of which is controlled by the average value of a pulsed current (I), and in that it further includes electrical means (29, 30) for, in one period of the current (I), suppressing the magnetizing energy (Em) stored in the said electromagnet.

2. Device according to Claim 1, characterized in that with the current (I) being periodic, the angular position of the rotary actuator (11) is a function of the duty cycle ($\frac{\tau}{T}$) of the current (I), corresponding to the ratio between the time when the current (I) is established and its period.

3. Device according to either of Claims 1 and 2, characterized in that the means (12) for transmitting a linear movement to the mechanical element consist of a link rod.

4. Device according to any one of the preceding claims, characterized in that it includes means (15) for measuring the angular position of the rotary actuator (11), the measurement means (15) delivering an electrical quantity representative of the angular position to an electronic module (13) supplying the control current (I) of the electromagnet of the rotary actuator (11) so as to slave the angular position thereof.

5. Device according to any one of the preceding claims, characterized in that the means (29, 30) for suppressing the magnetizing energy (Em) are contained in the electronic module (13).

**6.** Device according to Claim 1, characterized in that the means of suppressing the magnetizing energy (Em) include at least one resistor (30) and one diode (29) wired in series, the resistor (30) being linked to one end of the coil (22) of the electromagnet of the rotary actuator (11) and the cathode of the diode (29) being linked to the other end of the coil (22).

**7.** Device according to any one of the preceding claims, characterized in that the mechanical element (1) is a hydraulic slide valve routing the circulation of liquid through several hydraulic circuits (42, 43, 44).

**8.** Device according to Claim 7, characterized in that the liquid flowing in the hydraulic circuits (42, 43, 44) feeds a brake (45, 46).

**9.** Device according to Claim 8, characterized in that the slaving (13, 11, 15) of the angular position of the rotary actuator is doubled by slaving (71, 45, 72) of the liquid pressure in the brake (45, 46).

**10.** Device according to Claim 9, characterized in that the slaving of the liquid pressure in the brake (45, 46) comprises at least:

- one differentiator element (71), the output of which is linked to the electronic module (13), a pressure datum being set at the input of the differentiator element (71),
- one pressure sensor (72) linked to the negative input of the differentiator element (71), indicating thereto the real pressure obtained in the brake, the electronic module (13) carrying out a comparison between a datum which is a function of the error information supplied at the output of the differentiator element (71) and the electrical quantity delivered by the measurement means (15) which is representative of the angular position of the rotary actuator (11).

FIG.1a

FIG.1b

ORGANE MÉCANIQUE

MODULE ELECTRONIQUE

# FIG.2a

# FIG.2b

FIG.3

FIG.5

FIG.4a

FIG.4b

FIG.6

CONSIGNE DE PRESSION

MODULE ELECTRONIQUE

ACTIONNEUR ROTATIF

TIROIR HYDRAULIQUE

FREIN

FIG.7

EP 0 560 657 B1